# EUROPÄISCHE PATENTANMELDUNG

(11) **EP 4 557 642 A1**
(43) Veröffentlichungstag der Anmeldung: **21.05.2025**
(21) Anmeldenummer: 23210916.5
(22) Anmeldetag: 20.11.2023
(51) Int. Cl.: H04J 14/02

(54) **KOMMUNIKATIONSNETZ MIT RESSOURCENREDUZIERTER OPTISCHER VOLLVERMASCHUNG**

(71) Anmelder: Deutsche Telekom AG, 53113 Bonn (DE)
(72) Erfinder: BRAUN, Ralf-Peter, 12305 Berlin (DE); RITTER, Michaela, 10551 Berlin (DE); DÖRING, Ronny, 16775 Sonnenberg (DE); SCHATZMAYR, Rainer, 53229 Bonn (DE); MARTISKA, Martin, 15200 Prague (CZ); NÖCKEL, Philipp, 53721 Siegburg (DE); GEITZ, Marc, 58089 Hagen (DE); RIBEIRO SENA, Matheus, 14129 Berlin (DE)
(74) Vertreter: Nern, Peter-Michael

(57) **Zusammenfassung**

Vorgestellt wird ein Kommunikationsnetz mit einem optischen Transport-Netzwerk OTN und einer Mehrzahl von mit optischen Transceivern ausgestatten Netzwerkknoten, die mittels wenigstens eines passiven N x N Arrayed Waveguide Grating (N x N AWG) jeweils über Single Hop-Verbindungen bidirektional miteinander verbunden sind. Alle Netzwerkknoten einer Anzahl N des OTN sind über das N x N AWG Multipunkt zu Multipunkt zu mindestens einem vollvermaschten Netz miteinander verbunden, in welchem die Gesamtzahl der in den Netzwerkknoten angeordneten optischen Transceiver der Anzahl N der verbundenen Netzwerknoten entspricht. Je Netzwerkknoten ist nur ein optischer Transceiver T-XRO angeordnet, nämlich ein zur Nutzung des Prinzips der optisch kohärenten Subcarrier-Aggregation ausgebildeter Transceiver der Kategorie XR-Optics. Die Gesamtzahl der T-XRO skaliert stets linear mit der in dem Netz miteinander verbundenen Netzwerknoten. Das N x N AWG stellt an jedem seiner Ausgänge innerhalb des Übertragungsbandes Trägersignale unter Nutzung jedes, der verschiedenen, jeweils mit einem der Netzwerkknoten assoziierten optischen Subcarrier, jedoch zur selben Zeit stets voneinander verschiedene optische Subcarrier, bereit.

## Beschreibung

Die Erfindung betrifft ein Kommunikationsnetz, das als ein optisches Transportnetzwerk OTN ausgebildet ist, in welchem eine Mehrzahl von Netzwerkknoten bidirektional untereinander verbunden ist. Sie bezieht sich darauf, ein OTN so auszubilden, dass einerseits Multi-Hop-Verbindungen zwischen Netzwerknoten und das damit verbundene Erfordernis einer Nutzung von Netzwerkknoten als Transitknoten vermieden werden, dieses aber andererseits möglichst ressourcenschonend realisierbar ist.

Derzeit bestehende optische Transportnetzwerke (OTN = Optical Transport Network) sind hinsichtlich ihrer Topologie häufig als teilvermachte Netze ausgebildet. Das bedeutet, dass nicht alle Netzwerkknoten eines entsprechenden Kommunikationsnetzes direkt miteinander verbunden sind. Vielmehr werden die Verbindungen zwischen Netzwerkknoten in einem solchen teilvermaschten Netz vielfach unter Einbeziehung eines oder mehrerer anderer, hierbei als Transitknoten fungierender Netzwerkknoten des OTN und somit als sogenannte Multi-Hop-Verbindungen realisiert. Die zwischen solchen Transitknoten und den anderen Netzwerkknoten des Kommunikationsnetzes bestehenden Verbindungen werden dabei mit zusätzlichen, durch die Transitfunktion bedingten Datenverkehren belastet. Je nachdem, in welchem OSI-Layer die Durchschaltung entsprechender Datenverkehre in einem Transitknoten erfolgt, werden dadurch außerdem in einem Transitknoten zusätzliche IP-Kapazitäten erforderlich sowie gegebenenfalls in dem OTN unterschiedliche Ressourcen zusätzlich gebunden.

Zudem ist es nachteilig, dass Netze der zuvor beschrieben Art typischerweise eine starre Faser-Netzwerk-Topologie aufweisen. Hierdurch ist es verhältnismäßig aufwendig diese Netze an sich verändernde Gegebenheiten anzupassen, sie beispielsweise im Falle einer notwendig werdenden Erweiterung im Hinblick auf das Hinzutreten neuer, das heißt weiterer Netzwerkknoten oder zur Bereitstellung neuer Verbindungen zu rekonfigurieren und entsprechende Netze dabei möglichst auch noch zu optimieren.

Daher gibt es zunehmend Bestrebungen, insbesondere optische Kommunikationsnetze, respektive OTN, welche dies auf vergleichsweise elegante Art ermöglichen, als vollvermaschte Netze auszubilden. Hierbei bedient man sich der Technik des DWDM, das heißt des Dense Wavelenght Division Multiplexing, welche es ermöglicht, in einer einzigen Faser eines Lichtwellenleiterkabels mehrere, jeweils verschiedene Frequenzen nutzende optische Übertragungsbänder bereitzustellen. Über diese Mehrzahl von optischen Übertragungsbändern kann ein Netzwerkknoten Daten an mehrere andere Netzwerkknoten des OTN übertragen.

In diesem Zusammenhang ist es auch bekannt geworden, in einem OTN vorzugsweise in einem Sternpunkt ein als AWG, nämlich als Arrayed Waveguide Grating bezeichnetes passives optisches Bauelement anzuordnen. Sofern ein solches AWG eine der Anzahl N von Netzwerkknoten in dem OTN entsprechende Anzahl von Eingängen sowie von Ausgängen aufweist (N x N AWG), können mittels dieses N x N AWG alle Netzwerkknoten des OTN unter Ausbildung eines logischen, vollvermaschten Netzes ohne das Erfordernis von Transitknoten und somit durch Singe-Hop-Verbindungen bidirektional miteinander verbunden werden.

Allerdings werden in einer solchen Netzwerk Architektur in jedem Netzwerkknoten mehrere Transceiver benötigt, nämlich ein Transceiver je durch den jeweiligen Netzwerkknoten für die Übertragung an einen anderen Netzwerkknoten genutztem optischen Übertragungsband. Dies hat zur Folge, dass die Anzahl der insgesamt in den einzelnen Netzwerkknoten benötigten Transceiver in einem vollvermaschten OTN quadratisch mit der Anzahl der Netzwerkknoten N steigt. Konkret beträgt die Anzahl der benötigten Transceiver stets N x (N -1). Mit steigender Anzahl von Netzwerkknoten in einem entsprechenden Kommunikationsnetz und mit steigendem Bedarf an Übertragungskapazitäten ergibt sich hierdurch insbesondere im Hinblick auf die Anzahl der erforderlichen Transceiver ein immenser Aufwand, zumal für die Transceiver darüber hinaus eine entsprechende Anzahl zusätzlicher Komponenten wie Cards, Shelfs und Racks benötigt wird. In Verbindung damit besteht auch ein entsprechend hoher Strombedarf und Aufwand zur Kühlung der Transceiver. Ein vergleichsweise hoher Aufwand besteht dabei sowohl hinsichtlich der CapEx, also der Investitionskosten bei der Errichtung eines entsprechenden Netzes (mit CapEx = Capital Expenditures), als auch hinsichtlich der OpEx, nämlich der Betriebskosten für das Netz (mit OpEx = Operational Expenditures).

Aufgabe der Erfindung ist es daher, eine die vorgenannten Nachteile vermeidende Lösung zur Ausbildung eines Kommunikationsnetzes bereitzustellen. Die Aufgabe besteht insbesondere darin, ein Kommunikationsnetz mit einem optischen Transportnetzwerk OTN bereitzustellen, welches eine bidirektionale optische Verbindung einer Mehrzahl von Netzwerkknoten, einschließlich einer Vollvermaschung einer Anzahl N dieser Netzwerkknoten, bei einem gegenüber dem Stand der Technik reduzierten Aufwand an Ressourcen ermöglicht.

Die Aufgabe wird durch ein Kommunikationsnetz mit den Merkmalen des Patentanspruchs 1 gelöst. Vorteilhafte Aus- und Weiterbildungen der Erfindung sind durch die unter Unteransprüche gegeben.

Der Aufgabe entsprechend handelt es sich bei dem zur Lösung vorgeschlagenen Kommunikationsnetz um ein Kommunikationsnetz, mit einem optischen Transport-Netzwerk OTN. In diesem OTN ist eine Mehrzahl von mit optischen Transceivern ausgestatten Netzwerkknoten, über Lichtwellenleiterkabel (LWL-Kabel) unter Nutzung mindestens eines Frequenzbandes, das heißt eines optischen Übertragungsbandes (DWDM-Band), mittels wenigstens eines Arrayed Waveguide Grating AWG verbunden. Bei dieser passiven optischen Komponente, das heißt bei dem AWG, handelt es sich um ein N x N AWG, also um Arrayed Waveguide Grating, welches mindestens eine der Anzahl von über dieses AWG miteinander zu verbindenden Netzwerkknoten entsprechende Anzahl von optischen Eingängen sowie von optischen Ausgängen aufweist. Die Netzwerkknoten an den Ein- und Ausgängen des N x N AWG sind mittels diesem über Single Hop-Verbindungen bidirektional miteinander verbunden, wobei zur Erhöhung der Übertragungslänge bidirektionale optische Verstärker (OLA = Optical Line Amplifier) in diese Verbindungen eingefügt sein können. Dabei können sogar mehrere in Reihe geschaltete OLAs in die Verbindungen eingefügt sein, wodurch sich dann sogar Übertragungstrecken mit einer Länge von deutlich mehr als 2.000 km realisieren lassen.

In dem OTN sind alle Netzwerkknoten der Anzahl N über das wenigstens eine N x N AWG Multipunkt zu Multipunkt miteinander zu mindestens einem vollvermaschten Netz verbunden, in welchem die Gesamtzahl der in den Netzwerkknoten dieses mindestens einen vollvermaschten Netzes angeordneten optischen Transceiver der Anzahl N der darin, das heißt in dem vollvermaschten Netz, verbundenen Netzwerknoten entspricht. Durch das N x N AWG wird hierbei in dem vollvermaschten OTN ein passives, optisch transparentes wellenlängenadressiertes Routing ermöglicht.

An dieser Stelle sei angemerkt, dass es sich bei dem hier betrachteten und beanspruchten Kommunikationsnetz insoweit um ein inhärent vollvermaschtes OTN Netz handelt, als stets alle Netzwerkknoten einer Anzahl N von Netzwerkknoten an den Ein- und Ausgängen des N x N AWG untereinander direkt (Single-Hop) zu dem OTN miteinander verbunden sind. Dies schließt indes nicht aus, dass das Kommunikationsnetz neben seinem vollvermaschten Teil, respektive dem vollvermaschten OTN mit einer Anzahl von N Netzwerkknoten, nicht auch eine über diese Anzahl N von Netzknoten des vollvermaschten OTN hinausgehende Anzahl weiterer Netzwerknoten aufweisen kann, welche (gewolltermaßen) aus unterschiedlichen denkbaren Gründen nicht in die vollvermaschte Topologie mit einbezogen oder gar mithilfe anderer Übertragungstechnologien an das Kommunikationsnetz angebunden sind.

Innerhalb des mindestens einen vollvermaschten Netzes (OTN) ist dabei je Netzwerkknoten nur ein optischer Transceiver angeordnet. Dies wird möglich durch die Verwendung hier (in den Patentansprüchen und im Weiteren) verkürzend auch als T-XRO bezeichneten optischen Transceivern in den Netzwercknoten. Bei diesen handelt es sich um Transceiver der Kategorie der sogenannten XR-Optics (Transceiver XR-Optics = T-XRO). Transceiver dieser Art wie sie insbesondere im OPEN XR Forum beschrieben werden, sind gemäß den dortigen Ausführungen eigentlich speziell für den Einsatz beim Streaming von Daten über Punkt zu Multipunkt Verbindungen entwickelt worden. Im Sendebetrieb ermöglichen es diese Transceiver, die Strahlung einer für das Trägersignal genutzten Laserlichtquelle für die voneinander unabhängige Übertragung unterschiedlicher Datenströme in sogenannte Nyquist-Subcarrier zu unterteilen. Im Hinblick auf die kombinierte Sende- und Empfangsfunktionalität spricht man im Zusammenhang mit dem Einsatz solcher Transceiver auch von einer Nutzung des Prinzips der optisch kohärenten Subcarrier-Aggregation.

Bei dem zur Lösung der Aufgabe vorgeschlagenen Kommunikationsnetz skaliert die Gesamtzahl der optischen Transceiver T XRO der in dem mindestens einen vollvermaschten OTN miteinander verbundenen Netzwerknoten mit deren Anzahl N stets linear, und zwar auch im Falle diesbezüglich erfolgender Änderungen, also beispielsweise etwaiger Erweiterung des mindestens einen vollvermaschten Netzes um weitere Netzwerkknoten. Das wenigstens eine N x N AWG stellt an jedem seiner, mit jeweils einem aus der Anzahl N der Netzwerkknoten verbundenen Ausgänge innerhalb des in dem mindestens einen vollvermaschten OTN verwendeten optischen Übertragungsbandes Trägersignale unter Nutzung jedes, der jeweils mit einem der Netzwerkknoten assoziierten optischen Subcarrier dieses optischen Übertragungsbandes (DWDM-Bandes) bereit.

Die Anzahl der verwendeten und insoweit sowohl an den Ausgängen des N x N AWG sowie durch die T-XRO, respektive deren Transmitter Tx zur Aussendung zu übertragender Daten zur Verfügung gestellten Subcarrier entspricht dabei der Anzahl der Netzwerkknoten des mindestens einen vollvermaschten Netzes, woraus sich auch jeweils die Kanalbandbreite der Subcarrier (zum Beispiel 6,25 GHz) innerhalb des in dem mindestens einen vollvermaschten Netzes verwendeten Übertragungsbandes - ein Subband bezogen auf das für die optische Datenübertragung in dem Kommunikationsnetz insgesamt genutzten Bandes (beispielsweise erweitertes optisches C-Band mit einer Bandbreite von 4.800 GHz) - ergibt. Ein jeweiliger Netzwerkknoten kann, aufgrund der innerhalb dieses Übertragungsbandes (Subbandes) der Anzahl der Netzwerkknoten entsprechenden Anzahl von Subcarriern, hierbei auch Daten unter Nutzung eines mit ihm selbst assoziierten Subcarries (Subträgers), also Daten an sich selbst, aussenden. Dies kann genutzt werden, optische Leitungen von und zu dem N x N AWG zu überwachen, respektive zu monitoren, sowie Maintenance- und Management-Funktionalitäten einfach und kosteneffektiv zu implementieren.

Jeder in einem Übertragungsband verwendete optische Subcarrier stellt zugleich einen optischen Kanal dar, welcher insoweit jeweils mit einem bestimmten Netzwerkknoten assoziiert ist, als dieser Netzwerkknoten für ihn bestimmte Daten innerhalb des betreffenden Übertragungsbandes, das heißt innerhalb des mindestens einen, respektive innerhalb des jeweils betrachteten vollvermaschten Netzes, nur über diesen optischen Kanal (Subcarrier) empfängt. Im Zusammenhang mit der Datenübertragung über die vorgenannten optischen Subcarrier spricht man auch von digitalen Subcarriern DSC (mit DSC = Digital Sub-Carrier), wobei nicht immer die gesamte Breite eines optischen Subcarriers für die Übertragung von Daten nutzbar ist und somit die Bandbreite der DSC nicht immer mit der der optischen Subträger übereinstimmen muss. An den Ausgängen des wenigstens einen N x N AWG werden zur selben Zeit stets voneinander verschiedene optische Subcarrier und somit auch verschiedene DSC bereitgestellt.

An dieser Stelle sei angemerkt, dass das in dem mindestens einen optischen Netz oder in einem jeweiligen von gegebenenfalls mehreren optischen Netzen jeweils genutzte Übertragungsband nur einen geringen Teil der durch das die Netzwerkknoten jeweils mit dem N x N AWG verbindenden Lichtwellenleiterkabels zur Verfügung gestellten Übertragungsbandbreite ausmacht. Insoweit könnte grundsätzlich das gesamte optische Spektrum für die optische Übertragung von Daten genutzt werden. Typischerweise wird jedoch für die Übertragung das optische C-Band oder das erweiterte optische C-Band mit einem Frequenzbereich von 191.306,25 GHz bis 196.100,00 laut ITU-Definition genutzt, da Lichtwellenleiter in diesem Frequenzbereich einen der geringsten Verluste und somit einen großen Vorteil im Fernübertragungssystem aufweisen.

Wie bereits ausgeführt, sind die Netzwerkknoten in dem mindestens einen vollvermaschten Netz über das N x N AWG bidirektional verbunden. Das heißt ihre optischen Transceiver (T-XRO) senden mittels Tx (Transceivern) an jeweils einen ihnen zugeordneten Eingangsport des N x N AWG und empfangen mittels Rx (Receivern) von einem jeweiligen, ihnen zugeordneten Ausgangsport des N x N AWG. Das von einem Netzwerkknoten zum N x N AWG zur Aussendung an das N X N AWG genutzte optische Übertragungsband (ein Subband des gesamten für die Übertragung zur Verfügung stehenden optischen Spektrums) enthält bereits die optischen Subcarrier (Kanäle) für alle anderen Netzknoten (und gegebenenfalls, zu Kontrollzwecken, für den sendenden Knoten selbst) und das beim Netzwerkknoten vom N x N AWG ankommende Übertragungsband enthält die optischen Subcarrier (Kanäle) aller anderen Netzknoten.

Entsprechend einer möglichen Weiterbildung kann das in dem Kommunikationsnetz zwischen den Netzwerkknoten der Anzahl N ausgebildete OTN mehrere, jeweils verschiedene optische Übertragungsbänder verwendende, vollvermaschte optische Subnetze aufweisen. Hierbei ist dann in jedem der Netzwerkknoten eine der Anzahl der gebildeten optischen Subnetze entsprechende Anzahl von T-XRO angeordnet sowie ein optischer Multiplexer/Demultiplexer MUX/DEMUX. Unter Beibehaltung des grundsätzlichen Lösungsgedanken wird dabei, aufgrund des Einsatzes von T-XRO in den Netzwerkknoten, in dem jeweiligen, durch das verwendete Übertragungsband gebildete vollvermaschte Netz (Subnetz) wiederum eine der Anzahl der Netzwerkknoten entsprechende Anzahl von Subcarriern, respektive von optischen Kanälen, genutzt.

Im Zusammenhang mit der zuvor angesprochenen Weiterbildung kann das Kommunikationsnetz ein N x N AWG je gebildetem vollvermaschten optischen Subnetz aufweisen. In diesem Falle besteht das die Netzwerkknoten der Anzahl N mehrfach vollvermaschende OTN sowohl aus einer Mehrzahl physischer Subnetze, von denen jedes ein N x N AWG aufweist sowie dieselbe Anzahl, jeweils ein anderes optisches Übertragungsband verwendender logischer Subnetze. Hieraus ergibt sich der Vorteil, dass dabei eine der Anzahl der verwendeten optischen Übertragungsbänder entsprechende Anzahl voneinander völlig unabhängiger vollvermaschter Netze (Subnetze) gebildet ist, durch welche die Anzahl N der jeweils selben Netzwerkknoten über mehrere vollständig disjunkte Netzwerkpfade untereinander verbunden sind. Dadurch wiederum wird die Ausfallsicherheit des Kommunikationsnetzes insgesamt deutlich erhöht.

Gemäß einer anderen Alternative der an dieser Stelle in Rede stehenden Weiterbildung ist es aber auch denkbar, dass ein solches Kommunikationsnetz mindestens ein N x N AWG aufweist, über welches die optischen Übertragungsbänder mehrerer der gebildeten vollvermaschten Subnetze geführt sind, bis hin dazu, dass die Single-Hop-Verbindungen aller Subnetze und damit alle für sie verwendeten optischen Übertragungsbänder über nur ein einziges entsprechend ausgebildetes N x N AWG geführt sind. Im letztgenannten Fall besteht das OTN aus nur einem physischen Netz (LWL-Fasernetz, beispielsweise mit Sterntopologie) aber aus mehreren logischen Subnetzen, welche alle dasselbe hierbei zyklisch betriebene N X N AWG nutzen.

In jedem Falle wird gemäß dieser Alternative der mehrere optische Subnetze aufweisenden Weiterbildung des erfindungsgemäßen Kommunikationsnetzes das mindestens eine, in mehreren (oder allen) der logischen Subnetze, respektive mit mehreren optischen Übertragungsbändern genutzte N x N AWG in einer zyklischen Betriebsweise in der optischen Frequenzdomäne (zum Beispiel erweitertes optisches C-Band) betrieben. Hierbei werden durch dieses N x N AWG mit jedem Zyklus an jedem seiner Ausgänge Trägersignale unter Nutzung jedes innerhalb des jeweiligen Frequenzbandes eines für ein optisches Subnetz verwendeten optischen Übertragungsbandes mit einem der Netzwerkknoten assoziierten optischen Subcarriers bereitstellt, wobei innerhalb eines jeweiligen Zyklus an den einzelnen Ausgängen dieses N x N AWG jeweils voneinander verschiedene optische Übertragungsbänder und deren optische Subcarrier bereitgestellt werden. Das heißt aufgrund der Möglichkeit einer zyklischen Betriebsweise unterstützt das eine N x N AWG hierbei die Realisierung mehrerer vollvermaschter Subnetze, also die Nutzung mehrerer Subbänder mit jeweils einer Anzahl der Netzwerkknoten entsprechenden Anzahl von Subcarriern. Um bei dem weiter oben schon angesprochenen Beispiel zu bleiben, kann also bei einer generellen Beschränkung des insgesamt zur optischen Datenübertragung in dem beanspruchten Kommunikationsnetz verwendeten Frequenzbereiches auf das erweiterte optische C-Band, mit einer Bandbreite von 4.800 GHz, ein Vielzahl vollvermaschter Netze zwischen zum Beispiel 16 Netzwerkknoten mit jeweils 16 Subcarriern und einer Kanalbandbreite von jeweils 6,25 GHz je für ein solches Netz verwendetem Subband realisiert werden.

Im Falle dessen, dass das vollvermaschte OTN unter Ausbildung mehrerer logischer Subnetze realisiert wird, können in den Netzwerkknoten für die einzelnen Subnetze jeweils T-XRO unterschiedlicher Leistungsfähigkeit angeordnet sein. Allerdings müssen dabei die T-XRO und das N x N AWG hinsichtlich der genutzten Gesamtbandbreite des Subnetzes sowie hinsichtlich der Bandbreite der einzelnen in dem Subnetz verwendeten optischen Subcarrier aneinander angepasst sein. Zudem muss die Bandbreite der optischen MUX/DEMUX in den Netzwercknoten der Gesamtbandbreite des OTN als Summe der Bandbreiten der Übertragungsbänder aller optischen Subnetze entsprechen. Besonders vorteilhaft, aber nicht zwingend, ist es insoweit sicherlich, wenn alle Subnetze im Sinne einer Harmonisierung innerhalb der Netzwerkknoten mit jeweils identischen T-XRO ausgestattet sind.

Auf die insoweit hinsichtlich der Verwendung unterschiedlicher T-XRO und deren Leistungsfähigkeit mit Blick auf die Bandbreite sowie die jeweilige dabei erreichbare spektrale Effizienz (SE) und Übertragungslänge gegebenen Möglichkeiten soll später im Zusammenhang mit der Darstellung entsprechender Beispielkonfigurationen näher eingegangen werden.

Unter praktischen Gesichtspunkten, respektive im Hinblick auf eine besonders effiziente praktische Umsetzbarkeit der vorgeschlagenen Lösung ist das OTN vorzugsweise in einer Sterntopologie durch ein logisches Sternnetz (im Falle dessen, dass nur ein vollvermaschtes Netz realisiert wird) oder durch mehrere Sternsubnetze ausgebildet. Der Sternpunkt des Sternnetzes oder jedes der gebildeten Sternsubnetze wird hierbei durch ein N x N AWG ausgebildet. Zudem kann der Sternpunkt des Sternnetzes oder, im Falle des Vorhandenseins mehrerer Sternsubnetze, der Sternpunkt einzelner oder jedes der mehreren Sternsubnetze in einem der Netzwerkknoten angeordnet sein. In dem an dieser Stelle zuletzt betrachteten Fall (es sind mehrere Sternsubnetze ausgebildet) kann der jeweilige durch ein von diesen gemeinsam genutztes N x N AWG oder jeweils durch eines von mehreren N x N AWGs ausgebildet sein.

In praxisrelevanter Umsetzung der vorgeschlagenen Lösung können, wie für ein OTN als solches bereits bekannt, zur Erhöhung der erreichbaren optischen Reichweite zudem ausgangsseitig und eingangsseitig der Netzwerkknoten sowie in die sie mit dem mindestens einen N x N AWG verbindenden Lichtwellenleiterkabel breitbandige optische Verstärker (OLA = Optical Line Amplifier) eingefügt sein. Hierbei kann es sich beispielsweise um OLAs handeln, die als Erbium dotierte Fiber Amplifier (EDFA) Signale in dem etwas erweiterten optischen C-Band mit 4.800 GHz Bandbreite optisch verstärken können.

Für das erfindungsgemäße Kommunikationsnetz lassen sich folgende Vorteile angeben. Durch den Einsatz und die vorteilhafte Kombination von verschiedenen technologischen Verfahren und Systemen, wie unter anderem einer transparent optisch passiv gerouteten Netzarchitektur, zyklischer N x N AWGs und T-XRO, werden neuartige disruptive optische Transportnetzwerk-Architekturen möglich. Dabei ist die vorgeschlagene Lösung zur Ausbildung eines Kommunikationsnetzes nicht einfach die Weiterentwicklung einer der Technologien, sondern basiert gewissermaßen auf einem übergeordneten Blick zur Lösung des Problems des beim derzeitigen Stand der Technik in einem vollvermaschten Glasfasernetz zu verzeichnenden quadratischen Anstiegs der Anzahl der Transceiver mit der Anzahl der Netzknoten. Bei dem vorgeschlagenen Kommunikationsnetz skaliert die Anzahl der optischen Transceiver stets linear mit der Zahl der Netzwerkknoten. Hieraus resultiert, dass der sich bei einem Ausbau des Netzes ergebende Aufwand sowohl bei einer Erhöhung der Anzahl der Netzwerkknoten als auch bei der Realisierung zusätzlicher vollvermaschter Netze zwischen schon vorhandenen Netzwerkknoten deutlich geringer ist als bei bisher aus dem Stand der Technik bekannten optischen Kommunikationsnetzen, für die sich bei einem entsprechenden Ausbau aufgrund des quadratischen Zusammenhangs zwischen der Zahl der Netzwerkknoten und der Anzahl benötigter Transceiver zwangsläufig ein immenser, sich insbesondere in hohen Kosten niederschlagender Aufwand ergibt.

Demgegenüber ermöglich die erfindungsgemäße Lösung, wie gesagt, einen linearen Anstieg der Anzahl der benötigten Transceiver mit der Anzahl der Netzknoten. Hierdurch können enorme Aufwendungen bis hin zu Milliarden EUR Beträgen an einmaligen Kosten (CapEx) und jährlich wiederkehrenden Kosten (OpEx) für den Auf- und Ausbau sowie den Betrieb des Netzes eingespart werden.

Wesentliche Vorteile der vorgeschlagenen Lösung sind:
- sehr einfache Netzarchitektur,
- linearer Anstieg der Anzahl der Transceiver T-XRO mit der Anzahl der Netzknoten,
- passive optisch transparentes Wellenlängen adressiertes Routing,
- geringe Anzahl von Netzelementen,
- passive Netzelemente (wie N x N AWG),
- aktive Netzelemente sind nur optische Verstärker (OLA) im Netz,
- keine weiteren aktiven Netzelemente im Netz notwendig,
- geringe Anzahl von aktiven Netzelementen verringert die Ausfallwahrscheinlichkeit,
- geringe Anzahl von Netzelementen und Typen verringert die Vorratshaltung der Komponenten,
- passive MUX/DEMUX in den Knoten,
- Aushandeln der Spektralen Effizienz für jede Punkt-zu-Punkt Verbindung möglich,
- Übertragungslängen bis über 2.000 km möglich
- Kompromisse zwischen Spektraler Effizienz und Übertragungslänge können ausgehandelt und gefunden werden,
- mehrfach-vollvermaschte Netze mit Punkt-zu-Punkt- und Multipunkt-zu-Multipunkt-Verbindungen möglich,
- unabhängige Punkt-zu-Punkt Single-Hop-Verbindungen die sich nicht gegenseitig stören,
- einfaches Monitoring für jede einzelne Verbindung,
- einfaches Netzmanagement,
- die IP-Router in IP-Netzen bestimmen die Punkt-zu-Punkt-Verbindungen durch die Gewichtung der Routen,
- einfaches SDN (Software Defined Network) möglich,
- einfaches Umschalten von aktiven Verbindungen (Working-) auf Ersatz-Verbindungen im Fehlerfall (durch IP-Router),
- keine Managementkonflikte zwischen dem IP-Netz und den optischen Verbindungs-Netzen,
- geringe erste Netzkosten,
- der Aufbau eines Teilnetzes ist möglich (mindestens 2 Knoten sind mit einem N x N AWG verbunden),
- Ausbau des Netzes nach Bedarf (weitere Knoten werden nachgerüstet),
- Ausbau des Netzes nach Bedarf (weitere N x N AWG mit entsprechenden Verbindungen zu Knoten werden ausgebaut, zum Beispiel als redundantes Netz für Fehlerfälle (auch Mehrfachfehler können aufgefangen werden) oder um die Latenz für Working Verbindungen zwischen Knoten zu minimieren, können die verschiedenen N x N AWGs in unterschiedlichen Netzwerkknoten angeordnet sein,
- Ausbau der Kapazität des Netzes nach Bedarf (weitere optische plugable Transceiver T-XRO werden nachgerüstet),
- sehr hohe Skalierbarkeit des Netzes insgesamt,
- geringe Platz, Strom, Kühlung und Wartungskosten,
- nachhaltige Netzarchitektur,
- Verringerung der CO₂-Bilanz des Netzes,
- nahtlose Netzmigration zu bestehenden Netzen,
- Einsatz in verschiedenste, Netze möglich, inklusive,
   o Internationale Netze
   o Nationale Netze
   o Backbone, Core Netze
   o Regionale Netze
   o Access-Netze
   o Campus-Netze
   o Inhaus-Netze
   o Rechenzentrumsnetze
   o Internet Exchange Knoten
   o Datenhotel-Netze
- sehr große Einsparpotenziale gegenüber dem Stand der Technik für einmalige CapEx bis in den Milliarden EUR-Bereich entsprechend der genutzten Konfigurationen möglich,
- sehr große Einsparpotenziale gegenüber dem Stand der Technik für wiederkehrende jährliche OpEx bis in den Milliarden EUR-Bereich pro Jahr entsprechend den genutzten Szenarien möglich.

Nachfolgend soll anhand von Zeichnungen ein Ausführungsbeispiel für ein erfindungsgemäßes Kommunikationsnetz mit mehreren vollvermaschten Subnetzen (OTN) gegeben und erläutert werden, welche eine Anzahl N jeweils derselben Netzwerkknoten verbinden. Das Beispiel bezieht sich auf die Nutzung des erweiterten optischen C-Bandes, welches laut ITU-T G.694.1 Standard-Empfehlung mit einer Gesamtbandbreite von ca. 4.800 GHz in einem Frequenzband von 191.306,25 GHz bis 196.100,00 GHz (Wellenlängen von ca. 1.567,08 nm bis ca. 1.528,77 nm) angesiedelt ist. Es zeigen
- Fig. 1:: ein Strukturschema für eine Netzwerkarchitektur mit einem OTN mit 16 durch eine Mehrzahl von vollvermaschten Subnetzen verbundenen Netzwerkknoten,
- Fig. 2: ein Schema, betreffend die von einzelnen Netzwerkknoten in der Netzwerkarchitektur nach Fig. 1 unter Nutzung einer Mehrzahl optischer Übertragungsbänder und darin jeweils etablierter Subcarrier (optischer Kanäle) ausgesendeten sowie die bei ihnen eingehenden Datenpakete,
- Fig. 3: ein in Bezug auf die Verhältnisse an einem der Netzwerkknoten etwas feiner aufgelöstes Schema der Datenflüsse unter Nutzung der optischen Übertragungsbänder und Subcarrier in der Netzwerkarchitektur nach Fig. 1.

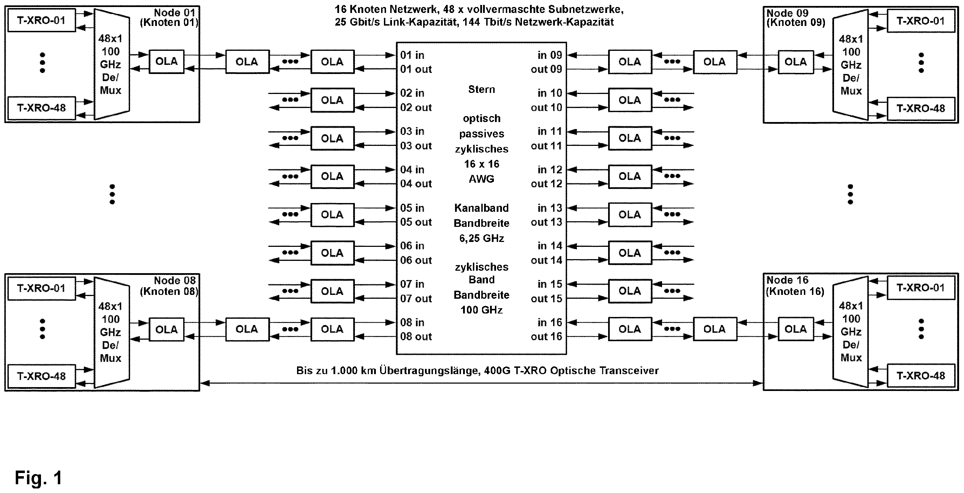

Die Fig. 1 zeigt ein Strukturschema für eine Netzwerkarchitektur eines OTN mit 16 Netzwerkknoten, die durch eine Mehrzahl von jeweils vollvermaschten optischen Subnetzen, im gezeigten Beispiel durch 48 Subnetze und somit 48 optische Übertragungsbänder miteinander verbundenen sind. In den nachfolgenden Erläuterungen und in den Zeichnungen wird synonym für "Netzwerkknoten" verkürzend auch der Begriff "Knoten" oder - englischsprachig - "Node" verwendet, wobei den genannten Begriffen auch im Falle einer gegebenenfalls schon in den vorangegangenen Ausführungen erfolgten Verwendung eine solche synonyme Bedeutung zukommt.

Ein jedes der 48 Subnetze des mehrfach vollvermaschten OTN ist mit einem optischen 100 GHz Übertragungsband, also einem optischen Frequenzband (des für die Datenübertragung genutzten Trägersignals) innerhalb des insgesamt 4.800 GHz breiten erweiterten optischen C-Bandes, sowie mit jeweils einem der in jedem der 16 Netzwerkknoten angeordneten 48 Transceiver T-XRO-01 bis T-XRO-48 assoziiert. Die 16 unter Nutzung der entsprechenden Subcarrier in den jeweiligen optischen Übertragungsbändern, respektive Frequenzbändern etablierten optischen Kanäle (Subcarrier) spannen das jeweilige vollvermaschte Subnetz bezüglich eines der Transceiver T-XRO-01 bis T-XRO-48 auf. Die optische Bandbreite pro T-XRO-nn Band beträgt bei dem gezeigten Beispiel gemäß den Figuren 1 bis 3 jeweils 100 GHz, mit 6,25 GHz Bandbreite pro optischem Kanal, respektive Subcarrier.

Mit einer Spektralen Effizienz SE von 4 Bit / s / Hz können pro digitalem Sub-Carrier (DSC) 25 Gbit/s über eine optische Kanal-Bandbreite von 6,25 GHz übertragen werden. Dabei können bis zu ca. 2.000 km Übertragungsstrecke, mit der entsprechenden Anzahl an Optical Line Amplifier (OLA) überbrückt werden. Mit nur 16 T-XRO 400G Transceivern (bis zu 400 Gbit/s) insgesamt, also einem T-XRO pro Netzwerkknoten kann eine Netzkapazität von 3 Tbit/s in nur einem vollvermaschten Netz bereitgestellt werden, wobei in dem OTN nur die gezeigten Komponenten notwendig sind. Pro Knoten sind ein OLA, ein 48 x 1 MUX/DEMUX und ein T-XRO-01 400G Transceiver notwendig. Im Sternpunkt sind neben dem optisch transparenten und zyklisch betriebenen 16 x 16 AWG noch weitere 16 OLAs vorgesehen. Zusätzlich sind für die Strecke zwischen Knoten und Sternpunkt noch eine entsprechende Anzahl von OLAs notwendig, die sich durch die Streckenlängen ergeben, wobei z.B. ein OLA eine Strecke von 40 km bis 60 km sinnvoll überbrücken kann.

Werden alle 48 vollvermaschten Subnetze bereitgestellt, respektive alle 48 Frequenzbänder (optische Übertragungsbänder) genutzt, dann ergibt sich eine maximale Netzkapazität von 48 x 3 Tbit/s = 144 Tbit/s.

Das N x N AWG ist eine passive optische Komponente, die bei Temperaturen von ca. 30°C bis 90°C betrieben werden kann und die dazu nur eine Temperaturregelung von ca. 10 W Leistung benötigt. Die Komponente kann mit optischen Leistungen bis ca. 0,5 W bis 1 W betrieben werden, wobei sich die anliegenden optischen Wellen mit typischen maximalen Leistungen von ca. -10 dBm auf den unterschiedlichen DWDM-Bändern und Subcarriern nicht stören.

In Provider-Netzen wird mindestens ein zusätzliches redundantes paralleles Netz aufgebaut, um Ersatzwege im Fehlerfall schalten zu können. Auf Basis der vorgestellten Lösung können ein zweites oder auch mehrere parallele (optische) Subnetze entsprechend der beschriebenen sehr einfachen und in Bezug auf CapEx als auch OpEx kosteneffektiven Netzarchitektur disjunkt aufgebaut werden. Dabei sollten die Sternpunkte mit einem 16 x 16 AWG in jeweils anderen Netzknoten liegen, um für den Arbeitspfad geringere Laufzeiten (Latenzen) für die entsprechenden Punkt-zu-Punkt Verbindungen des Multipunkt-zu-Multipunkt-Netzwerks zu erhalten. Der Ausbau des Netzes wird dabei nach dem Kapazitätsbedarf der einzelnen Verbindungen ausgerichtet sein und er besteht einfach in der zusätzlichen Nutzung weiterer T-XRO-nn in den Routern, welche vorteilhafterweise als pluggable Transceiver ausgebildet und somit leicht nachrüstbar sein können. Das Ganze ist bei geringem Aufwand für die Lagerhaltung mit nur wenigen durch verschiedene Hersteller bereitgestellten Elementen, also auch herstellerunabhängig realisierbar, woraus wiederum ein geringer OpEx resultiert.

Das Kommunikationsnetz, respektive insbesondere dessen OTN benötigt nur geringe erste Rationalisierungsinvestitionen, da nur wenige Komponenten benötigt werden, die neben dem passiven N x N AWG als bekannte Technik in vorliegenden optischen Netzen bereits eingeführt sind, zum Beispiel passive Glasfasern und aktive optische Verstärker.

Das Netz kann nach Bedarf nachhaltig ausgebaut werden, indem einfach T-XRO-Komponenten in den Knoten nachgerüstet werden. Dabei können Netzkapazitäten bis zu 144 Tbit/s ausgebaut werden, wobei am Netzwerk (OTN) selbst keine Änderungen notwendig sind, sondern nur je hinzukommenden Übertragungsband (Subnetz) 16 T-XRO-nn Transceiver nachgerüstet werden müssen. Durch die geringe Anzahl der Komponenten ergeben sich sehr geringe Foot Print, Energie und Kühlungsbedarfe, so dass kosteneffektiv, nachhaltig und mit geringeren CO₂-Bilanzen wiederum auch der jährliche OpEx drastisch reduziert werden kann.

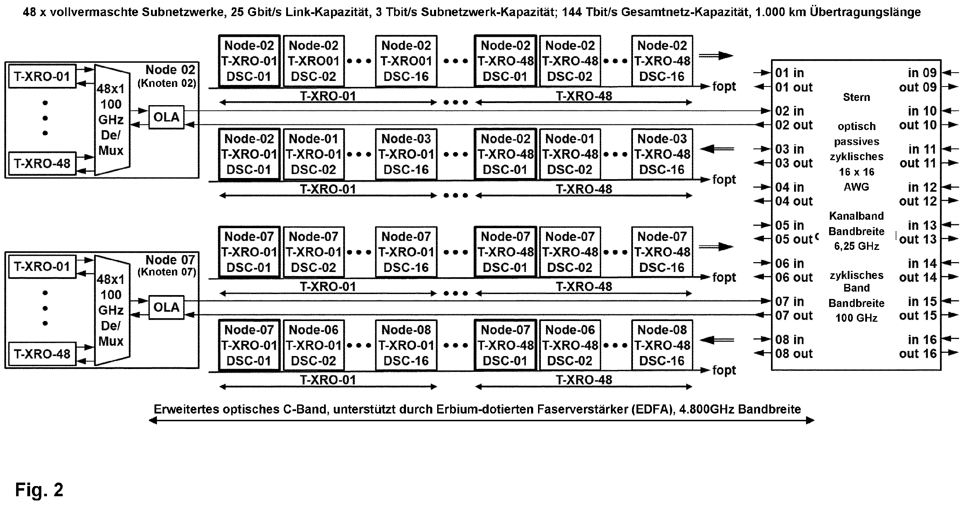

Die Fig. 2 veranschaulicht beispielhaft in einem Schema die von den Netzwercknoten 02 und 07 (auch "Knoten 02" oder "Node 02" beziehungsweise "Knoten 07" oder Node 07") der Netzwerkarchitektur nach Fig. 1 unter Nutzung einer Mehrzahl optischer Übertragungsbänder - hier 48 - und der darin jeweils etablierten der Anzahl N der Netzwerkknoten entsprechenden Subcarrier, also 16 Subcarrier ausgesendeten und empfangenen Datenpakete. Das 16 x 16 AWG stellt demnach an jedem seiner, mit einem der Netzwerkknoten verbundenen Ausgänge innerhalb des jeweils verwendeten optischen T-XRO-nn Übertragungsbandes Trägersignale unter Nutzung jedes, der jeweils mit einem der Netzwerkknoten assoziierten optischen Subcarrier DSC-nn dieses optischen Übertragungsbandes bereit. Dabei werden an den Ausgängen des 16 x 16 AWG, wie ersichtlich, zur selben Zeit stets voneinander verschiedene optische Subcarrier bereitgestellt. Für die Möglichkeit der Nutzung mehrerer vollvermaschter Netze, respektive hier von 48 Übertragungsbändern, wird das N x N AWG in einer zyklischen Betriebsweise eingesetzt.

Die in der Zeichnung fett gezeichneten Subcarrier-Bänder Node-02, T-XRO-01, DSC-01 und Node-02, T-XRO-48, DSC-01 sowie Node-07, T-XRO-01, DSC-01 und Node-07, T-XRO48, DSC-01 entsprechen gleichen gesendeten und empfangenen Bändern, die in dem N x N AWG rein passiv und optisch transparent durchgeroutet (durchgeschaltet) werden.

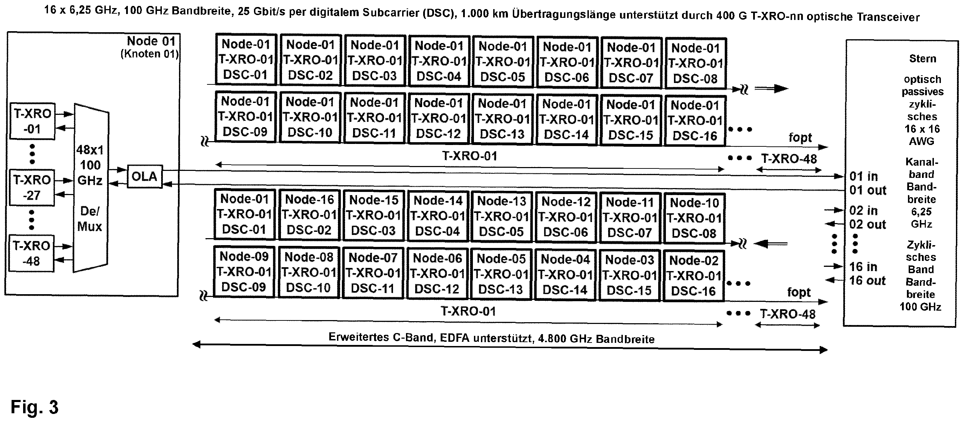

Die Fig. 3 zeigt nochmals ein in Bezug auf die Verhältnisse an dem Netzwerkknoten 01 etwas feiner aufgelöstes Schema der Datenflüsse, respektive das Routingschema unter Nutzung der optischen Übertragungsbänder T-XRO-nn und Subcarrier DSC-01 bis DSC-16 in der Netzwerkarchitektur gemäß der Fig. 1 für den Netzwerkknoten 01 des OTN. Darin sind die abgehenden und ankommenden spektralen T-XRO-01-Anteile für den Netzwerkknoten 01 (Node 01) vollständig und für die anderen 47 T-XRO-nn-Bereiche angedeutet. Es wird hierbei klar, dass der Netzwerkknoten 01, von allen anderen 15 Netzwerkknoten (Node 02 bis Node 16), jeweils ein entsprechendes Signal erhält und auch an dieses versendet, womit eine Vollvermaschung zwischen den 16 Netzwerkknoten des OTN vorliegt, wobei der Netzwerkknoten 01 (Node 01), wie bereits früher erwähnt, auch Signale (Daten) an sich selbst aussenden und von sich selbst empfangen kann. Hierbei werden jedoch für eine Vollvermaschung nur ein optischer Transceiver T-XRO-01 pro Netzwerkknoten und somit nur 16 T-XRO für N = 16 Netzwerkknoten benötigt, anstatt der nach dem Stand der Technik erforderlichen N x (N - 1) = 240 Transceiver. Die im gezeigten Beispiel dennoch vorhandenen mehreren, respektive 48 T-XRO-nn je Netzwerkknoten erklären sich durch die Nutzung mehrerer Subnetze des OTN, das heißt durch dessen mehrfache, respektive 48-fache Vollvermaschung.

Wie bereits früher ausgeführt, kann das Netzwerk, respektive das hier beispielhaft in der Fig. 1 gezeigte OTN unter Verwendung von T-XRO unterschiedlicher Leistungsfähigkeit realisiert werden, wobei die T-XRO vorzugsweise, respektive typischerweise, als pluggable T-XRO ausgebildet sind. Allerdings müssen dabei die T-XRO innerhalb eines jeweiligen optischen Subnetztes und das von diesem genutzte N x N AWG in Bezug auf die Bandbreite des Übertragungsbandes des Subnetzes sowie hinsichtlich der Bandbreite der einzelnen in dem Subnetz verwendeten optischen Subcarrier aneinander angepasst sein. Vorzugsweise - und davon gehen die nachfolgend beispielhaft betrachteten Konfigurationen aus - werden in dem OTN durchgängig T-XRO mit gleichen Parametern eingesetzt. Für unterschiedliche Konfigurationen mit hinsichtlich ihrer Leistungsfähigkeit unterschiedlichen, dann - unter Bezug auf die Fig. 1 - jeweils in allen 48 Subnetzen und in allen 16 Netzwerkknoten eingesetzte T-XRO sollen nachstehend einige technische Parameter sowie die sich bei den derzeitigen preislichen Gegebenheiten potenziell ergebenden Kosten, respektive potenziellen Kosteneinsparungen, aufgezeigt werden.

### Konfiguration 01

Die Konfiguration basiert auf einem 400 Gbit/s Modul mit einem 16 QAM (Quadrature Amplitude Modulation) Übertragungsformat, das 16 Digital Sub-Carrier (DSC) mit jeweils einer Sub-Carrier-Bitrate von 25 Gbit/s in einem optischen Band von 64 GHz nutzen kann. Das 400 Gbit/s Signal wird in 16 optischen Subcarriern innerhalb einer optischen Bandbreite von 64 GHz übertragen. Damit steht pro optischem Subcarrier eine optische Übertragungsbandbreite von 64 GHz / 16 = 4 GHz zur Verfügung. Da pro Sub-Carrier (DSC) 25 Gbit/s über 4 GHz übertragen werden, berechnet sich die Spektrale Effizienz dieses Übertragungsformates zu 25 Gbit/s / 4 GHz = 6,25 Bit/s/Hz. Dem entsprechend wäre eine Übertragungsstrecke von ca. 1.000 km möglich.

Aus technischer Sicht ist die Konfiguration 01 insbesondere durch folgende Parameter gekennzeichnet:
- 16 Digital Sub-Carrier (DSC) der T-XRO-Komponente bei 16 Netzwercknoten und 16 optischen Kanälen (Subcarriern),
- 4 GHz für die optische Kanalbandbreite (nicht standardkonform),
- 75 vollvermaschte Sub-Bänder im erweiterten C- Band (4.800 GHz Bandbreite),
- 16 x 16 AWG mit 4 GHz Kanal Bandbreite und 64 GHz AWG-Band Bandbreite
- 75 x 1 MUX/DEMUX mit 64 GHz AWG-Band Bandbreite,
- 400G T-XRO (optischer Transceiver).

Hinsichtlich der Kosten können folgende Abschätzungen getroffen werden, wobei Betriebsausgaben OpEx jeweils pro Jahr (per anno = /a) angegeben werden und sich der Zusatz PASM bei Angaben zu OpEx auf Betriebskosten für das Management von Energieversorgung, Aircondition und Footprint (Fläche), das heißt insbesondere Kühlung elektronischer Komponenten beziehen. Die Angaben zu potenziellen Ersparnissen beziehen sich hier, wie auch bei den später noch betrachteten Konfiguration jeweils auf ein OTN mit gleicher Zahl von Netzwercknoten und gleicher Anzahl gebildeter vollvermaschter Subnetze:
- Kosten der T-XRO 400G Komponente: 18.000,00 EUR,
- Kosten N x N AWG: 10.000,00 EUR,
- Kosten MUX/DEMUX je Knoten 2.000 EUR
- OpEx PASM N x N AWG im Sternpunktknoten + OLAs:
   140.510,40 EUR/a,
- OpEx OLAs des OTN: 1.401.600,00 EUR/a,
- OpEx PASM pro Netzwerkknoten bei einfacher Vollvermaschung für T-XRO + OLA: 12.264,00 EUR/a,
- OpEx PASM für alle Netzwerkknoten bei einfacher Vollvermaschung für T-XROs + OLAs: 196.224,00 EUR/a,
- OpEx PASM für alle Netzwerkknoten bei mehrfacher Vollvermaschung für T-XROs + OLAs: 4.344.960,00 EUR/a
- OpEx für das OTN (AWG T-XRO) bei einfacher Vollvermaschung:
   1.738.334,40 EUR/a,
- OpEx für das OTN (AWG T-XRO) bei mehrfacher Vollvermaschung:
   5.887.070,40 EUR/a,
- Potenzielle Ersparnis CapEx für das OTN bei einfacher Vollvermaschung (gesamt): 1.872.000,00 EUR,
- Potenzielle Ersparnis OpEx für das OTN bei einfacher Vollvermaschung (gesamt): 370.022,40 EUR/a,
- Potenzielle Ersparnis CapEx für das OTN bei mehrfacher Vollvermaschung (gesamt): 140.400.000,00 EUR,
- Potenzielle Ersparnis OpEx für das OTN bei mehrfacher Vollvermaschung (gesamt): 27.336.806,40 EUR/a,

Die Konfiguration 01 ist ein erster Ansatz, der auf den Parametern der 400G T-XRO- Komponente beruht. Hierbei ist allerdings anzumerken, dass die sich durch die optischen Transceiver T-XRO ergebenden Parameter nicht mit der Empfehlung des Standards, ITU-T G.694.1 DWDM Frequency Grid, für die Anordnung der optischen Übertragungsbänder und Kanäle vereinbar sind. Daher werden die Parameter in den folgenden Szenarien modifiziert, um sie standardkonform zu gestalten.

### Konfiguration 02

Die Konfiguration 02 basiert auf einem modifizierten optischen Transceiver 400G T-RXO (bis zu 400 Gbit/s), der eine optische Kanalbandbreite von 6,25 GHz unterstützt. Aus technischer Sicht ist die Konfiguration 02 insbesondere durch folgende Parameter gekennzeichnet:
- 16 Digital Sub-Carrier (DSC) der T-XRO-Komponente bei 16 Netzwercknoten und 16 optischen Kanälen (Subcarriern),
- 6,25 GHz für die optische Kanalbandbreite,
- 48 vollvermaschte Übertragungsbänder im erweiterten C- Band (4.800 GHz Bandbreite),
- 16 x 16 AWG mit 6,25 GHz Kanal Bandbreite und 100 GHz AWG Band Bandbreite,
- 48 x 1 MUX/DEMUX mit 100 GHz AWG-Band Bandbreite,
- 400G T-XRO (optischer Transceiver der Kategorie XR Optics).

Der durch die ITU fixierte Standard unterstützt ein 6,25 GHz grid in Bezug auf die die Mittenfrequenzen der Subcarrier, wobei dieser Standard aber bisher auf ein 12,5 GHz grid für die Kanalbandbreiten (Bandbreiten der Subcarrier) abstellt. Insoweit wäre unter anderem mit Blick auf die hier betrachtete Konfiguration eine Erweiterung des Standards auf 6,25 GHz Kanalbandbreiten erforderlich, wobei eine solche Änderung des Standards zukünftig sicherlich durchaus in Betracht gezogen werden sollte.

Hinsichtlich der Kosten können folgende Abschätzungen getroffen werden:
- Kosten der T-XRO 400G Komponente: 18.000,00 EUR,
- Kosten N x N AWG: 10.000,00 EUR,
- Kosten MUX/DEMUX je Knoten 2.000 EUR
- OpEx PASM N x N AWG im Sternpunktknoten + OLAs:
   140.510,40 EUR/a,
- OpEx OLAs des OTN: 1.401.600,00 EUR/a,
- OpEx PASM pro Netzwerkknoten bei einfacher Vollvermaschung für T-XRO + OLA: 12.264,00 EUR/a,
- OpEx PASM für alle Netzwerkknoten bei einfacher Vollvermaschung für T-XROs + OLAs: 196.224,00 EUR/a,
- OpEx PASM für alle Netzwerkknoten bei mehrfacher (48-facher) Vollvermaschung für T-XROs + OLAs: 2.831.232,00 EUR/a
- OpEx für das OTN (AWG T-XRO) bei einfacher Vollvermaschung:
   1.738.334,40 EUR/a,
- OpEx für das OTN (AWG T-XRO) bei mehrfacher (48-facher) Vollvermaschung: 4.373.342,40 EUR/a,
- Potenzielle Ersparnis CapEx für das OTN bei einfacher Vollvermaschung (gesamt): 1.872.000,00 EUR,
- Potenzielle Ersparnis OpEx für das OTN bei einfacher Vollvermaschung (gesamt): 370.022,40 EUR/a,
- Potenzielle Ersparnis CapEx für das OTN bei mehrfacher (48-facher) Vollvermaschung (gesamt): 89.856.000,00 EUR,
- Potenzielle Ersparnis OpEx für das OTN bei mehrfacher (48-facher) Vollvermaschung (gesamt): 17.497.574,40 EUR/a,

Vorstehend, so auch im Zusammenhang mit den Figuren 1 bis 3, wurde anschaulich ein OTN mit 16 Netzwerkknoten betrachtet. Durch die Variation der Parameter können weitere Szenarien dargestellt werden. Die Anzahl der Netzwerkknoten kann erhöht werden, die Kapazität der T-XRO- Komponenten kann gesteigert werden, zum Beispiel von 400G auf 800G, 1600G und 3200G (siehe nachfolgend betrachtete Konfigurationen 03 bis 11) und die Bandbreite der optischen Bänder und Kanäle kann entsprechend angepasst werden. Der Begriff optisches Band ist hierbei assoziiert mit einen bestimmten Frequenzband, also mit einer bestimmter Übertragungsfrequenz des Trägersignals, wohingegen der Begriff optischer Kanal in Bezug auf die mit einem jeweiligen Frequenzband über die Beziehung c₀ = fₒₚₜ x λ korrespondierende Wellenlänge (mit c₀ = Lichtgeschwindigkeit, fₒₚₜ = optische Frequenz und λ = Wellenlänge) gebraucht wird.

### Konfiguration 03

Die Konfiguration 03 basiert auf einem modifizierten optischen Transceiver 800G T-XRO (bis zu 800 Gbit/s), der eine optische Kanalbandbreite von 6,25 GHz unterstützt. Aus technischer Sicht ist die Konfiguration 03 insbesondere durch folgende Parameter gekennzeichnet:
- 32 Digital Sub-Carrier (DSC) der T-XRO-Komponente bei 32 Netzwercknoten und 32 optischen Kanälen (Subcarriern),
- 6,25 GHz für die optische Kanalbandbreite,
- 24 vollvermaschte Sub-Bänder im erweiterten C-Band (4.800 GHz Bandbreite)
- 32 x 32 AWG mit 6,25 GHz Kanal Bandbreite und 200 GHz AWG Band Bandbreite
- 24 x 1 MUX/DEMUX mit 200 GHz AWG-Band Bandbreite
- 800G T-XRO (optischer Transceiver der Kategorie XR Optics).

Für die Kosten können folgende Abschätzungen getroffen werden:
- Kosten der T-XRO 800G Komponente: 36.000,00 EUR,
- Kosten N x N AWG: 20.000,00 EUR,
- Kosten MUX/DEMUX je Knoten 2.000 EUR
- OpEx PASM N x N AWG im Sternpunktknoten + OLAs:
   280.670,40 EUR/a,
- OpEx OLAs des OTN: 2.803.200,00 EUR/a,
- OpEx PASM pro Netzwerkknoten bei einfacher Vollvermaschung für T-XRO + OLA: 15.768,00 EUR/a,
- OpEx PASM für alle Netzwerkknoten bei einfacher Vollvermaschung für T-XROs + OLAs: 504.576,00 EUR/a,
- OpEx PASM für alle Netzwerkknoten bei mehrfacher (24-facher) Vollvermaschung für T XROs + OLAs: 5.662.464,00 EUR/a
- OpEx für das OTN (AWG T-XRO) bei einfacher Vollvermaschung:
   3.588.446,40 EUR/a,
- OpEx für das OTN (AWG T-XRO) bei mehrfacher (24-facher) Vollvermaschung: 8.746.334,40 EUR/a,
- Potenzielle Ersparnis CapEx für das OTN bei einfacher Vollvermaschung (gesamt): 16.704.000,00 EUR,
- Potenzielle Ersparnis OpEx für das OTN bei einfacher Vollvermaschung (gesamt): 3.262.924,80 EUR/a,
- Potenzielle Ersparnis CapEx für das OTN bei mehrfacher (24-facher) Vollvermaschung (gesamt): 400.896.000,00 EUR,
- Potenzielle Ersparnis OpEx für das OTN bei mehrfacher (24-facher) Vollvermaschung (gesamt): 78.052.300,80 EUR/a,

### Konfiguration 04

Die Konfiguration 04 basiert auf einem modifizierten optischen Transceiver 1600G T-XRO (bis zu 1.600 Gbit/s), der eine optische Kanalbandbreite von 6,25 GHz unterstützt. Aus technischer Sicht ist die Konfiguration 04 insbesondere durch folgende Parameter gekennzeichnet:
- 64 Digital Sub-Carrier (DSC) der T-XRO-Komponente bei 64 Netzwercknoten und 64 optischen Kanälen (Subcarriern),
- 6,25 GHz für die optische Kanalbandbreite,
- 12 vollvermaschte Sub-Bänder im erweiterten C-Band (4.800 GHz Bandbreite)
- 64 x 64 AWG mit 6,25 GHz Kanal Bandbreite und 400 GHz AWG Band Bandbreite
- 12 x 1 MUX/DEMUX mit 400 GHz AWG-Band Bandbreite
- 1600G T-XRO (optischer Transceiver der Kategorie XR Optics).

Für die Kosten können folgende Abschätzungen getroffen werden:
- Kosten der T-XRO 1600G Komponente: 72.000,00 EUR,
- Kosten N x N AWG: 40.000,00 EUR,
- Kosten MUX/DEMUX je Knoten 2.000 EUR
- OpEx PASM N x N AWG im Sternpunktknoten + OLAs:
   560.990,40 EUR/a,
- OpEx OLAs des OTN: 5.606.400,00 EUR/a,
- OpEx PASM pro Netzwerkknoten bei einfacher Vollvermaschung für T-XRO + OLA: 22.776,00 EUR/a,
- OpEx PASM für alle Netzwerkknoten bei einfacher Vollvermaschung für T-XROs + OLAs: 1.457.664,00 EUR/a,
- OpEx PASM für alle Netzwerkknoten bei mehrfacher (12-facher) Vollvermaschung für T XROs + OLAs: 11.324.928,00 EUR/a
- OpEx für das OTN (AWG T-XRO) bei einfacher Vollvermaschung:
   7.625.054,40 EUR/a,
- OpEx für das OTN (AWG T-XRO) bei mehrfacher (12-facher) Vollvermaschung: 17.492.318,40 EUR/a,
- Potenzielle Ersparnis CapEx für das OTN bei einfacher Vollvermaschung (gesamt): 140.544.000,00 EUR,
- Potenzielle Ersparnis OpEx für das OTN bei einfacher Vollvermaschung (gesamt): 27.381.657,60 EUR/a,
- Potenzielle Ersparnis CapEx für das OTN bei mehrfacher (12-facher) Vollvermaschung (gesamt): 1.686.528.000,00 EUR,
- Potenzielle Ersparnis OpEx für das OTN bei mehrfacher (12-facher) Vollvermaschung (gesamt): 328.333.209,60 EUR/a,

### Konfiguration 05

Die Konfiguration 05 basiert auf einem modifizierten optischen Transceiver 3200G T-XRO (bis zu 3.200 Gbit/s), der eine optische Kanalbandbreite von 6,25 GHz unterstützt. Aus technischer Sicht ist die Konfiguration 05 insbesondere durch folgende Parameter gekennzeichnet:
- 128 Digital Sub-Carrier (DSC) der T-XRO-Komponente bei 128 Netzwercknoten und 128 optischen Kanälen (Subcarriern),
- 6,25 GHz für die optische Kanalbandbreite,
- 6 vollvermaschte Sub-Bänder im erweiterten C-Band (4.800 GHz Bandbreite)
- 128 x 128 AWG mit 6,25 GHz Kanal Bandbreite und 800 GHz AWG Band Bandbreite
- 6 x 1 MUX/DEMUX mit 800 GHz AWG-Band Bandbreite
- 3200G T-XRO (optischer Transceiver der Kategorie XR Optics).

Bezüglich der Kosten können bei dieser Konfiguration folgende Abschätzungen getroffen werden:
- Kosten der T-XRO 3200G Komponente: 144.000,00 EUR,
- Kosten N x N AWG: 80.000,00 EUR,
- Kosten MUX/DEMUX je Knoten 2.000 EUR
- OpEx PASM N x N AWG im Sternpunktknoten + OLAs:
   1.121.630,40 EUR/a,
- OpEx OLAs des OTN: 11.212.800,00 EUR/a,
- OpEx PASM pro Netzwerkknoten bei einfacher Vollvermaschung für T-XRO + OLA: 36.792,00 EUR/a,
- OpEx PASM für alle Netzwerkknoten bei einfacher Vollvermaschung für T-XROs + OLAs: 4.709.376,00 EUR/a,
- OpEx PASM für alle Netzwerkknoten bei mehrfacher (6-facher) Vollvermaschung für T XROs + OLAs: 22.649.856,00 EUR/a
- OpEx für das OTN (AWG T-XRO) bei einfacher Vollvermaschung:
   17.043.806,40 EUR/a,
- OpEx für das OTN (AWG T-XRO) bei mehrfacher (6-facher) Vollvermaschung: 34.984.286,40 EUR/a,
- Potenzielle Ersparnis CapEx für das OTN bei einfacher Vollvermaschung (gesamt): 1.152.000.000,00 EUR,
- Potenzielle Ersparnis OpEx für das OTN bei einfacher Vollvermaschung (gesamt): 224.300.851,20 EUR/a,
- Potenzielle Ersparnis CapEx für das OTN bei mehrfacher (6-facher) Vollvermaschung (gesamt): 6.912.000.000,00 EUR,
- Potenzielle Ersparnis OpEx für das OTN bei mehrfacher (6-facher) Vollvermaschung (gesamt): 1.345.580.851,20 EUR/a,

### Konfiguration 06

Die Konfiguration 06 basiert auf einem modifizierten optischen Transceiver 800G T-XRO (bis zu 800 Gbit/s), der eine optische Kanalbandbreite von 12,5 GHz unterstützt. Aus technischer Sicht ist die Konfiguration 06 insbesondere durch folgende Parameter gekennzeichnet:
- 16 Digital Sub-Carrier (DSC) der T-XRO-Komponente bei 16 Netzwercknoten und 16 optischen Kanälen (Subcarriern),
- 12,5 GHz für die optische Kanalbandbreite,
- 24 vollvermaschte Sub-Bänder im erweiterten C-Band (4.800 GHz Bandbreite)
- 16 x 16 AWG mit 12,5 GHz Kanal Bandbreite und 200 GHz AWG Band Bandbreite
- 24 x 1 MUX/DEMUX mit 200 GHz AWG-Band Bandbreite
- 800G T-XRO (optischer Transceiver der Kategorie XR Optics).

Zu den Kosten lässt sich folgende Abschätzung geben:
- Kosten der T-XRO 800G Komponente: 36.000,00 EUR,
- Kosten N x N AWG: 10.000,00 EUR,
- Kosten MUX/DEMUX je Knoten 2.000 EUR
   - OpEx PASM N x N AWG im Sternpunktknoten + OLAs:
      140.510,40 EUR/a,
   - OpEx OLAs des OTN: 1.401.600,00 EUR/a,
- OpEx PASM pro Netzwerkknoten bei einfacher Vollvermaschung für T-XRO + OLA: 15.768,00 EUR/a,
- OpEx PASM für alle Netzwerkknoten bei einfacher Vollvermaschung für T-XROs + OLAs: 252.288,00 EUR/a,
- OpEx PASM für alle Netzwerkknoten bei mehrfacher (24-facher) Vollvermaschung für T XROs + OLAs: 2.831.232,00 EUR/a
- OpEx für das OTN (AWG T-XRO) bei einfacher Vollvermaschung:
   1.794.398,40 EUR/a,
- OpEx für das OTN (AWG T-XRO) bei mehrfacher (24-facher) Vollvermaschung: 4.373.342,40 EUR/a,
- Potenzielle Ersparnis CapEx für das OTN bei einfacher Vollvermaschung (gesamt): 3.744.000,00 EUR,
- Potenzielle Ersparnis OpEx für das OTN bei einfacher Vollvermaschung (gesamt): 734.438,40 EUR/a,
- Potenzielle Ersparnis CapEx für das OTN bei mehrfacher (24-facher) Vollvermaschung (gesamt): 89.856.000,00 EUR,
- Potenzielle Ersparnis OpEx für das OTN bei mehrfacher (24-facher) Vollvermaschung (gesamt): 17.497.574,40 EUR/a,

### Konfiguration 07

Die Konfiguration 07 basiert auf einem modifizierten optischen Transceiver 1600G T-XRO (bis zu 1.600 Gbit/s), der eine optische Kanalbandbreite von 12,5 GHz unterstützt. Aus technischer Sicht ist die Konfiguration 07 insbesondere durch folgende Parameter gekennzeichnet:
- 32 Digital Sub-Carrier (DSC)der T-XRO-Komponente bei 32 Netzwerkknoten und 32 optischen Kanälen (Subcarriern),
- 12,5 GHz für die optische Kanalbandbreite,
- 12 vollvermaschte Sub-Bänder im erweiterten C-Band (4.800 GHz Bandbreite)
- 32 x 32 AWG mit 12,5 GHz Kanal Bandbreite und 400 GHz AWG Band Bandbreite
- 12 x 1 MUX/DEMUX mit 400 GHz AWG-Band Bandbreite
- 1600G T-XRO (optischer Transceiver der Kategorie XR Optics).

Folgende Kostenabschätzung lässt sich treffen:
- Kosten der T-XRO 1600G Komponente: 72.000,00 EUR,
- Kosten N x N AWG: 20.000,00 EUR,
- Kosten MUX/DEMUX je Knoten 2.000 EUR
   - OpEx PASM N x N AWG im Sternpunktknoten + OLAs:
      280.670,40 EUR/a,
   - OpEx OLAs des OTN: 2.803.200,00 EUR/a,
   - OpEx PASM pro Netzwerkknoten bei einfacher Vollvermaschung für T-XRO + OLA: 22.776,00 EUR/a,
   - OpEx PASM für alle Netzwerkknoten bei einfacher Vollvermaschung für T-XROs + OLAs: 728.832,00 EUR/a,
   - OpEx PASM für alle Netzwerkknoten bei mehrfacher (12-facher) Vollvermaschung für T XROs + OLAs: 5.662.464,00 EUR/a
   - OpEx für das OTN (AWG T-XRO) bei einfacher Vollvermaschung:
      3.812.702,40 EUR/a,
   - OpEx für das OTN (AWG T-XRO) bei mehrfacher (12-facher) Vollvermaschung: 8.746.334,40 EUR/a,
   - Potenzielle Ersparnis CapEx für das OTN bei einfacher Vollvermaschung (gesamt): 33.408.000,00 EUR,
   - Potenzielle Ersparnis OpEx für das OTN bei einfacher Vollvermaschung (gesamt): 6.514.636,80 EUR/a,
   - Potenzielle Ersparnis CapEx für das OTN bei mehrfacher (12-facher) Vollvermaschung (gesamt): 400.896.000,00 EUR,
   - Potenzielle Ersparnis OpEx für das OTN bei mehrfacher (12-facher) Vollvermaschung (gesamt): 78.052.300,80 EUR/a,

### Konfiguration 08

Die Konfiguration 08 basiert auf einem modifizierten optischen Transceiver 3200G T-XRO (bis zu 3.200 Gbit/s), der eine optische Kanalbandbreite von 12,5 GHz unterstützt. Aus technischer Sicht ist die Konfiguration 08 insbesondere durch folgende Parameter gekennzeichnet:
- 64 Digital Sub-Carrier (DSC) der T-XRO-Komponente bei 64 Netzwercknoten und 64 optischen Kanälen (Subcarriern),
- 12,5 GHz für die optische Kanalbandbreite,
- 6 vollvermaschte Sub-Bänder im erweiterten C-Band (4.800 GHz Bandbreite)
- 64 x 64 AWG mit 12,5 GHz Kanal Bandbreite und 800 GHz AWG Band Bandbreite
- 6 x 1 MUX/DEMUX mit 800 GHz AWG-Band Bandbreite
- 3200G T-XRO (optischer Transceiver der Kategorie XR Optics).

Zu dieser Konfiguration kann folgende Kostenabschätzung gegeben werden:
- Kosten der T-XRO 3200G Komponente: 144.000,00 EUR,
- Kosten N x N AWG: 40.000,00 EUR,
- Kosten MUX/DEMUX je Knoten 2.000 EUR
   - OpEx PASM N x N AWG im Sternpunktknoten + OLAs:
      560.990,40 EUR/a,
   - OpEx OLAs des OTN: 5.606.400,00 EUR/a,
   - OpEx PASM pro Netzwerkknoten bei einfacher Vollvermaschung für T-XRO + OLA: 36.792,00 EUR/a,
   - OpEx PASM für alle Netzwerkknoten bei einfacher Vollvermaschung für T-XROs + OLAs: 2.354.688,00 EUR/a,
   - OpEx PASM für alle Netzwerkknoten bei mehrfacher (6-facher) Vollvermaschung für T XROs + OLAs: 11.324.928,00 EUR/a
- OpEx für das OTN (AWG T-XRO) bei einfacher Vollvermaschung:
   8.522.078,40 EUR/a,
- OpEx für das OTN (AWG T-XRO) bei mehrfacher (6-facher) Vollvermaschung: 17.492.318,40 EUR/a,
- Potenzielle Ersparnis CapEx für das OTN bei einfacher Vollvermaschung (gesamt): 281.088.000,00 EUR,
- Potenzielle Ersparnis OpEx für das OTN bei einfacher Vollvermaschung (gesamt): 54.740.889,60 EUR/a,
- Potenzielle Ersparnis CapEx für das OTN bei mehrfacher (6-facher) Vollvermaschung (gesamt): 1.686.528.000,00 EUR,
- Potenzielle Ersparnis OpEx für das OTN bei mehrfacher (6-facher) Vollvermaschung (gesamt): 328.333.209,60 EUR/a,

### Konfiguration 09

Die Konfiguration 09 basiert auf einem modifizierten optischen Transceiver 1600G T-XRO (bis zu 1.600 Gbit/s), der eine optische Kanalbandbreite von 25 GHz unterstützt. Aus technischer Sicht ist die Konfiguration 09 insbesondere durch folgende Parameter gekennzeichnet:
- 16 Digital Sub-Carrier (DSC) der T-XRO-Komponente bei 16 Netzwercknoten und 16 optischen Kanälen (Subcarriern),
- 25 GHz für die optische Kanalbandbreite,
- 12 vollvermaschte Sub-Bänder im erweiterten C-Band (4.800 GHz Bandbreite)
- 16 x 16 AWG mit 25 GHz Kanal Bandbreite und 400 GHz AWG Band Bandbreite
- 12 x 1 MUX/DEMUX mit 400 GHz AWG-Band Bandbreite
- 1600G T-XRO (optischer Transceiver der Kategorie XR Optics).

Zu der Konfiguration lässt folgende Kostenabschätzung treffen:
- Kosten der T-XRO 1600G Komponente: 72.000,00 EUR,
- Kosten N x N AWG: 10.000,00 EUR,
- Kosten MUX/DEMUX je Knoten 2.000 EUR
   - OpEx PASM N x N AWG im Sternpunktknoten + OLAs:
      140.510,40 EUR/a,
   - OpEx OLAs des OTN: 1.401.600,00 EUR/a,
   - OpEx PASM pro Netzwerkknoten bei einfacher Vollvermaschung für T-XRO + OLA: 36.792,00 EUR/a,
   - OpEx PASM für alle Netzwerkknoten bei einfacher Vollvermaschung für T-XROs + OLAs: 588.672,00 EUR/a,
   - OpEx PASM für alle Netzwerkknoten bei mehrfacher (12-facher) Vollvermaschung für T XROs + OLAs: 5.522.304,00 EUR/a
   - OpEx für das OTN (AWG T-XRO) bei einfacher Vollvermaschung:
      2.130.782,40 EUR/a,
   - OpEx für das OTN (AWG T-XRO) bei mehrfacher (12-facher) Vollvermaschung: 7.064.414,40 EUR/a,
   - Potenzielle Ersparnis CapEx für das OTN bei einfacher Vollvermaschung (gesamt): 7.488.000,00 EUR,
   - Potenzielle Ersparnis OpEx für das OTN bei einfacher Vollvermaschung (gesamt): 1.239.014,40 EUR/a,
   - Potenzielle Ersparnis CapEx für das OTN bei mehrfacher (12-facher) Vollvermaschung (gesamt): 89.856.000,00 EUR,
   - Potenzielle Ersparnis OpEx für das OTN bei mehrfacher (12-facher) Vollvermaschung (gesamt): 14.806.502,40 EUR/a,

### Konfiguration 10

Die Konfiguration 10 basiert auf einem modifizierten optischen Transceiver 3200G T-XRO (bis zu 3.200 Gbit/s), der eine optische Kanalbandbreite von 25 GHz unterstützt. Aus technischer Sicht ist die Konfiguration 10 insbesondere durch folgende Parameter gekennzeichnet:
- 32 Digital Sub-Carrier (DSC) der T-XRO-Komponente bei 32 Netzwercknoten und 32 optischen Kanälen (Subcarriern),
- 25 GHz für die optische Kanalbandbreite,
- 6 vollvermaschte Sub-Bänder im erweiterten C-Band (4.800 GHz Bandbreite)
- 32 x 32 AWG mit 25 GHz Kanal Bandbreite und 800 GHz AWG Band Bandbreite
- 6 x 1 MUX/DEMUX mit 800 GHz AWG-Band Bandbreite
- 3200G T-XRO (optischer Transceiver der Kategorie XR Optics).

Folgende Kostenabschätzung lässt sich hierbei treffen:
- Kosten der T-XRO 3200G Komponente: 144.000,00 EUR,
- Kosten N x N AWG: 20.000,00 EUR,
- Kosten MUX/DEMUX je Knoten 2.000 EUR
   - OpEx PASM N x N AWG im Sternpunktknoten + OLAs:
      280.670,40 EUR/a,
   - OpEx OLAs des OTN: 2.803.200,00 EUR/a,
   - OpEx PASM pro Netzwerkknoten bei einfacher Vollvermaschung für T-XRO + OLA: 36.792,00 EUR/a,
   - OpEx PASM für alle Netzwerkknoten bei einfacher Vollvermaschung für T-XROs + OLAs: 1.177.344,00 EUR/a,
   - OpEx PASM für alle Netzwerkknoten bei mehrfacher (6-facher) Vollvermaschung für T XROs + OLAs: 5.662.464,00 EUR/a
   - OpEx für das OTN (AWG T-XRO) bei einfacher Vollvermaschung:
      4.261.214,40 EUR/a,
   - OpEx für das OTN (AWG T-XRO) bei mehrfacher (6-facher) Vollvermaschung: 8.746.334,40 EUR/a,
   - Potenzielle Ersparnis CapEx für das OTN bei einfacher Vollvermaschung (gesamt): 7.488.000,00 EUR,
   - Potenzielle Ersparnis OpEx für das OTN bei einfacher Vollvermaschung (gesamt): 1.239.014,40 EUR/a,
   - Potenzielle Ersparnis CapEx für das OTN bei mehrfacher (6-facher) Vollvermaschung (gesamt): 89.856.000,00 EUR,
   - Potenzielle Ersparnis OpEx für das OTN bei mehrfacher (6-facher) Vollvermaschung (gesamt): 14.806.502,40 EUR/a,

### Konfiguration 11

Die Konfiguration 11 basiert auf einem modifizierten optischen Transceiver 3200G T-XRO (bis zu 3.200 Gbit/s), der eine optische Kanalbandbreite von 50 GHz unterstützt. Aus technischer Sicht ist die Konfiguration 11 insbesondere durch folgende Parameter gekennzeichnet:
- 16 Digital Sub-Carrier (DSC) der T-XRO-Komponente bei 16 Netzwercknoten und 16 optischen Kanälen (Subcarriern),
- 50 GHz für die optische Kanalbandbreite,
- 6 vollvermaschte Sub-Bänder im erweiterten C-Band (4.800 GHz Bandbreite)
- 16 x 16 AWG mit 50 GHz Kanal Bandbreite und 800 GHz AWG Band Bandbreite
- 6 x 1 MUX/DEMUX mit 800 GHz AWG-Band Bandbreite
- 3200G T-XRO (optischer Transceiver der Kategorie XR Optics).

Für diese Konfiguration lässt sich folgende Kostenabschätzung geben:
- Kosten der T-XRO 3200G Komponente: 144.000,00 EUR,
- Kosten N x N AWG: 10.000,00 EUR,
- Kosten MUX/DEMUX je Knoten 2.000 EUR
   - OpEx PASM N x N AWG im Sternpunktknoten + OLAs:
      140.510,40 EUR/a,
   - OpEx OLAs des OTN: 1.401.600,00 EUR/a,
   - OpEx PASM pro Netzwerkknoten bei einfacher Vollvermaschung für T-XRO + OLA: 36.792,00 EUR/a,
   - OpEx PASM für alle Netzwerkknoten bei einfacher Vollvermaschung für T-XROs + OLAs: 588.672,00 EUR/a,
   - OpEx PASM für alle Netzwerkknoten bei mehrfacher (6-facher) Vollvermaschung für T XROs + OLAs: 2.831.232,00 EUR/a
   - OpEx für das OTN (AWG T-XRO) bei einfacher Vollvermaschung:
      2.130.782,40 EUR/a,
   - OpEx für das OTN (AWG T-XRO) bei mehrfacher (6-facher) Vollvermaschung: 4.373.342,40 EUR/a,
   - Potenzielle Ersparnis CapEx für das OTN bei einfacher Vollvermaschung (gesamt): 14.976.000,00 EUR,
   - Potenzielle Ersparnis OpEx für das OTN bei einfacher Vollvermaschung (gesamt): 2.920.934,40 EUR/a,
   - Potenzielle Ersparnis CapEx für das OTN bei mehrfacher (6-facher) Vollvermaschung (gesamt): 89.856.000,00 EUR,
   - Potenzielle Ersparnis OpEx für das OTN bei mehrfacher (6-facher) Vollvermaschung (gesamt): 17.497.574,40 EUR/a,

### Diskussion der Konfigurationen (Szenarien)

Die Spektrale Effizienz wurde, im Hinblick auf eine Vergleichbarkeit, für alle Konfigurationen konstant bei 4 Bit/s/Hz angenommen. Dadurch ändert sich die maximale Netzkapazität nur mit der Anzahl der Netzwerkknoten im OTN und damit mit der Anzahl der möglichen Punkt-zu-Punkt Verbindungen, da die Bandbreite des erweiterten C-Bandes konstant bei 4.800 GHz verbleibt. Beispielsweise ist bei der Konfiguration 05 eine maximale Netzkapazität von ca. 1.219 Tbit/s = 1,22 Pbit/s (Peta Bit/s = 10¹⁵ Bit/s) bei 128 Netzwerkknoten und optischen Kanälen mit 6,25 GHz optischer Kanalbandbreit und mit einer Spektralen Effizienz von 4 Bit/s/Hz möglich.

Die Netzkapazitäten können auch durch den Einsatz anderer Übertragungsformate in den T-XRO-Komponenten einfach erhöht werden, wobei aber ein Kompromiss bezüglich der Übertragungslänge eingegangen werden muss.

Eine Verdopplung der Spektralen Effizienz von 4 Bit/s/Hz auf 8 Bit/s/Hz könnte die Netzkapazität auf 2,44 Pbit/s erhöhen, bei gleicher optischer Bandbreite des erweiterten optischen C-Bandes.

Die optischen, zur Kategorie XR Optics gehörenden, das Prinzip der Subcarrier-Aggregation nutzenden Transceiver (T-XRO) können auch für gemischte Spektrale Effizienzen verwendet werden, wobei für kürzere Strecken im OTN höhere Spektrale Effizienzen eingestellt werden können. Das ist möglich, weil eine Vollvermaschung des OTN vorliegt, in welchem die Netzwerkknoten Multipunkt-zu-Multipunkt verbunden sind, dabei aber Daten zwischen einzelnen Netzwerkknoten ausschließlich direkt Punkt-zu-Punkt, also nicht über Transitknoten, übertragen werden. Dadurch kann für jede Punkt-zu-Punkt Übertragung das Übertragungsformat und damit auch die Spektrale Effizienz individuell eingestellt, respektive auch automatisch ausgehandelt werden, wodurch auch die SDN-Funktionalität (SDN = Software Defined Network) durch das erfindungsgemäße Netz unterstützt werden würde.

In den Konfigurationen 02 bis 11 sind die Bandbreiten der Digitalen Sub-Carrier mit 6,25 GHz, 12,5 GHz, 25 GHz und 50 GHz konform mit der ITU-T G.694.1 Empfehlung für die DWDM Frequency Grids. Die Bandbreite der Digitalen Sub-Carrier (DSC) der T-XRO-Komponente beträgt dabei in den Konfigurationen 02 bis 05 jeweils 6,25 GHz, was auch der optischen Kanalbandbreite entspricht. In den Konfigurationen 06 bis 08, 09 bis 10 und 11 betragen die entsprechenden Bandbreiten der DSC-Komponente 12,5 GHz, 25 GHz und 50 GHz. Die Anzahl der Netzwerkknoten variiert entsprechend der Szenarien mit 16, 32, 64 und 128 Netzwerkknoten, was auch gleichzeitig der Anzahl der Ports des N x N AWG entspricht. Dadurch ergeben sich für die vollvermaschten Subnetze unterschiedliche Knotenzahlen mit entsprechenden Netzwerk-Übertragungskapazitäten, welche durch die nachfolgende Tabelle nochmals in einer Übersicht dargestellt sind.

| Konfiguration | OpEx einfache Vollvermaschung gemäß Erfindung Mio EUR/a | OpEx einfache Vollvermaschung gemäß Stand der Technik Mio EUR/a | OpEx Einfache Vollvermaschung, Differenz Mio EUR/a | OpEx maximaler Ausbau gemäß Erfindung Mio EUR/a | OpEx maximaler Ausbau gemäß Stand der Technik Mio EUR/a | OpEx maximaler Ausbau, Differenz Mio EUR/a |
|---|---|---|---|---|---|---|
| 02 | 1,738 | 2,108 | 0,370 | 4,373 | 21,871 | 17,498 |
| 03 | 3,588 | 6,851 | 3,263 | 8,746 | 86,799 | 78,053 |
| 04 | 7,625 | 35,007 | 27,382 | 17,492 | 345,826 | 328,334 |
| 05 | 17,044 | 241,345 | 224,301 | 34,984 | 1.380,565 | 1.345,581 |
| 06 | 1,794 | 2,529 | 0,735 | 4,373 | 21,871 | 17,498 |
| 67 | 3,813 | 10,327 | 6,514 | 8,746 | 86,799 | 78,053 |
| 08 | 8,522 | 63,263 | 54,741 | 17,492 | 345,826 | 328,334 |
| 09 | 2,131 | 3,370 | 1,239 | 7,064 | 21,871 | 14,807 |
| 10 | 4,261 | 17,279 | 13,018 | 8,746 | 86,799 | 78,053 |
| 11 | 2,131 | 5,052 | 2,921 | 4,373 | 21,871 | 17,498 |

## Patentansprüche

1. Kommunikationsnetz, mit einem optischen Transport-Netzwerk OTN, in welchem eine Mehrzahl von mit optischen Transceivern ausgestatten Netzwercknoten über Lichtwellenleiterkabel unter Nutzung mindestens eines Frequenzbandes, das heißt eines optischen Übertragungsbandes, mittels wenigstens eines, mindestens eine der Anzahl der Netzwerkknoten entsprechende Anzahl von optischen Eingängen sowie von optischen Ausgängen aufweisenden AWG, nämlich mittels eines passiven N x N Arrayed Waveguide Grating, jeweils über Single Hop-Verbindungen bidirektional miteinander verbunden sind, **dadurch gekennzeichnet, dass** alle Netzwerkknoten einer Anzahl N von Netzwerkknoten des OTN über das wenigstens eine N x N AWG Multipunkt zu Multipunkt zu mindestens einem vollvermaschten Netz miteinander verbunden sind, in welchem die Gesamtzahl der in den Netzwerkknoten dieses mindestens einen vollvermaschten Netzes angeordneten optischen Transceiver der Anzahl N der darin verbundenen Netzwerknoten entspricht, wobei je Netzwerkknoten des mindestens einen vollvermaschten Netzes nur ein optischer Transceiver angeordnet ist, nämlich ein optischer Transceiver T-XRO, welcher als Transceiver der Kategorie XR-Optics zur Nutzung des Prinzips der optisch kohärenten Subcarrier-Aggregation ausgebildet ist und wobei die Gesamtzahl der optischen Transceiver T-XRO der in dem mindestens einen vollvermaschten Netz miteinander verbundenen Netzwerknoten mit deren Anzahl N, auch im Falle diesbezüglich erfolgender Änderungen, stets linear skaliert und dass das wenigstens eine N x N AWG an jedem seiner, mit jeweils einem aus der Anzahl N der Netzwerkknoten verbundenen Ausgänge innerhalb des verwendeten optischen Übertragungsbandes Trägersignale unter Nutzung jedes, der verschiedenen, jeweils mit einem der Netzwerkknoten assoziierten optischen Subcarrier dieses optischen Übertragungsbandes bereitstellt, wobei an den Ausgängen des wenigstens einen N x N AWG zur selben Zeit stets voneinander verschiedene optische Subcarrier bereitgestellt werden.

2. Kommunikationsnetz nach Anspruch 1, **dadurch gekennzeichnet, dass** das zwischen den Netzwerkknoten der Anzahl N ausgebildete OTN mehrere jeweils verschiedene optische Übertragungsbänder verwendende vollvermaschte Subnetze aufweist, wobei jeder der Netzwerkknoten eine der Anzahl der gebildeten optischen Subnetze entsprechende Anzahl von T-XRO sowie einen optischen Multiplexer/Demultiplexer MUX/DEMUX aufweist.

3. Kommunikationsnetz nach Anspruch 2, **dadurch gekennzeichnet, dass** dieses ein N x N AWG je vollvermaschtem optischen Subnetz aufweist.

4. Kommunikationsnetz nach Anspruch 2, **dadurch gekennzeichnet, dass** dieses mindestens ein N x N AWG aufweist, über welches die optischen Übertragungsbänder mehrerer der gebildeten vollvermaschten Subnetze geführt sind und dass das mindestens eine dafür ausgebildete, mit mehreren optischen Übertragungsbändern genutzte sowie in einer zyklischen Betriebsweise betriebene N x N AWG mit jedem Zyklus an jedem seiner Ausgänge Trägersignale unter Nutzung jedes innerhalb des jeweiligen Frequenzbandes eines für ein optisches Subnetz verwendeten optischen Übertragungsbandes mit einem der Netzwercknoten assoziierten optischen Subcarriers bereitstellt, wobei innerhalb eines jeweiligen Zyklus an den einzelnen Ausgängen dieses N x N AWG jeweils voneinander verschiedene und unabhängige optische Übertragungsbänder und deren optische Subcarrier bereitgestellt werden.

5. Kommunikationsnetz nach einem der Ansprüche 2 bis 4, **dadurch gekennzeichnet, dass** für die gebildeten vollvermaschten Subnetze in den Netzwerkknoten jeweils T-XRO unterschiedlicher Leistungsfähigkeit angeordnet sind, wobei die T-XRO und das N x N AWG eines jeweiligen Subnetzes hinsichtlich der Gesamtbandbreite des Subnetzes sowie der Bandbreite der in dem Subnetz verwendeten optischen Subcarrier aneinander angepasst sind und wobei die Bandbreite der optischen MUX/DEMUX der Gesamtbandbreite des die optischen Subnetze aufweisenden OTN entspricht.

6. Kommunikationsnetz nach einem der Ansprüche 1 bis 5, **dadurch gekennzeichnet, dass** das OTN in einer Sterntopologie mit einem Sternnetz oder mehreren Sternsubnetzen ausgebildet ist, wobei der Sternpunkt des Sternnetzes durch das N x N AWG oder, im Falle des Vorhandenseins mehrerer Sternsubnetze, der Sternpunkt einzelner Sternsubnetze oder jedes der Sternsubnetze durch ein von diesen gemeinsam genutztes N x N AWG oder jeweils durch ein N x N AWG ausgebildet ist.

7. Kommunikationsnetz nach Anspruch 6, **dadurch gekennzeichnet, dass** der Sternpunkt des Sternnetzes oder mindestens eines der mehreren Sternsubnetze in einem der Netzwerkknoten angeordnet ist.

8. Kommunikationsnetz nach einem der Ansprüche 1 bis 7, **dadurch gekennzeichnet, dass** ausgangsseitig und eingangsseitig der Netzwerkknoten sowie in die sie mit dem mindestens einen N x N AWG verbindenden bidirektionalen Lichtwellenleiterkabel breitbandige Optical Line Amplifier OLA, nämlich optische Verstärker eingefügt sind.
